# EUROPEAN PATENT SPECIFICATION

(11) **EP 3 703 166 B1**
(45) Date of publication and mention of the grant of the patent: **06.11.2024**
(21) Application number: 19160073.3
(22) Date of filing: 28.02.2019
(51) Int. Cl.: H01M 8/103, H01M 8/1048, H01M 8/1088, H01M 8/1018, H01M 8/10

(54) **METHOD FOR MECHANICAL STABILIZATION OF POLYBENZIMIDAZOLES AND ION-CONDUCTIVE MEMBRANES THEREFROM**
METHODE ZUR MECHANISCHEN STABILISATION VON POLYBENZIMIDAZOLEN UND IONENLEITENDE MEMBRANEN DAVON
MÉTHODE DE STABILISATION MÉCHANIQUE DE POLYBENZIMIDOLES ET MEMBRANES CONDUCTRICES D'IONS DE CEUX-CI

(43) Date of publication of application: 02.09.2020
(73) Proprietor: Zentrum für Brennstoffzellen-Technik GmbH, 47057 Duisburg (DE); Institute of Polymers Bulgarian Academy of Sciences, 1113 Sofia (BG)
(72) Inventor: PENCHEV, Hristo, Gabrovo (BG); SINIGERSKY, Vesselin, 1463 Sofia (BG); UBLEKOV, Filip, Pazardjik (BG); RADEV, Ivan, 40472 Düsseldorf (DE); PEINECKE, Volker, 45472 Mülheim (DE)
(74) Representative: Zenz Patentanwälte Partnerschaft mbB

(56) References cited:
- "Chemical Transformations of Polymers", 1 January 1972, ELSEVIER, ISBN: 978-0-408-70310-9, article L.D. LOAN: "PEROXIDE CROSSLINKING REACTIONS OF POLYMERS", pages: 173 - 180, XP055583436, DOI: 10.1016/B978-0-408-70310-9.50015-0
- LAI SHIAUWU ET AL: "Mechanical property enhancement of ultra-thin PBI membrane by electron beam irradiation for PEM fuel cell", INTERNATIONAL JOURNAL OF HYDROGEN ENERGY, ELSEVIER SCIENCE PUBLISHERS B.V., BARKING, GB, vol. 41, no. 22, 10 May 2016 (2016-05-10), pages 9556 - 9562, XP029557658, ISSN: 0360-3199, DOI: 10.1016/J.IJHYDENE.2016.04.111
- L. D. LOAN: "Peroxide crosslinking reactions of polymers", PURE & APPLIED CHEMISTRY, vol. 30, no. 1-2, 1 January 1972 (1972-01-01), GB, pages 173 - 180, XP055583438, ISSN: 0033-4545, DOI: 10.1351/pac197230010173
- HRISTO PENCHEV ET AL: "Highly KOH doped para-polybenzimidazole anion exchange membrane and its performance in Pt/TinO2n-1 catalyzed water electrolysis cell", MATERIALS LETTERS, vol. 221, 1 June 2018 (2018-06-01), AMSTERDAM, NL, pages 128 - 130, XP055583386, ISSN: 0167-577X, DOI: 10.1016/j.matlet.2018.03.094
- FILIP UBLEKOV ET AL: "Composite anion conductive membranes based on para-polybenzimidazole and montmorillonite", MATERIALS LETTERS, vol. 219, 1 May 2018 (2018-05-01), AMSTERDAM, NL, pages 131 - 133, XP055583390, ISSN: 0167-577X, DOI: 10.1016/j.matlet.2018.02.082

## Description

### Field of the invention

The present invention relates to a process for mechanical stabilization of polybenzimidazoles (PBIs) and preparation of ion-conductive polymer electrolyte membranes from these mechanically stabilized PBIs, a polymer electrolyte membrane obtainable by said process and being suitable for use in fuel cells, electrolyzer cells, batteries, capacitors, electrochemical sensors, electrodialysis and electroosmosis devices, and all other devices and cells comprising such membranes.

### Background of the invention

Polymer electrolyte membrane fuel cellsand electrolyzers are receiving a growing interest for many potential power source applications (stationary, automotive and portable) because of their high-power density, high-energy conversion efficiency and environmental friendliness. Over the last decade, there has been a very intense research activity focused on improving the properties of polymer electrolyte membranes - higher conductivity, higher selectivity of the ion conduction, better mechanical properties, higher chemical stability, low gas permeability, etc.

There are two types of fuel cells and electrolyzers with polymer membrane - proton exchange membrane fuel cells (PEMFCs) and electrolyzers (PEMWE), and anion exchange membrane fuel cells (AEMFCs) and electrolyzers (AEMWE). PEMFCs and PEMWEs use proton-exchange (or -conductive) membranes (PEMs) as electrolytes that separate the two electrodes (anode and cathode), while AEMFCs and AEMWEs use anion-exchange (or -conductive) membranes for this purpose. The requirements for both membrane types are very stringent. Along with high ion conductivity and low gas permeability, the chemical stability and mechanical properties at elevated working temperatures are of primary importance.

The most widely used polymer materials for the preparation of high temperature membranes (working temperature above 100 °C) are the so-called polybenzimidazoles (PBIs). This is a class of thermally stable polymers, developed in the early sixties of the 20th century. The chemical structures of the most popular PBIs and their abbreviations are shown below:

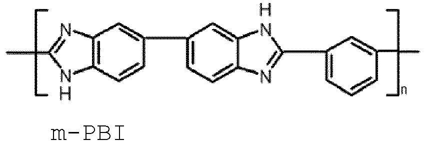

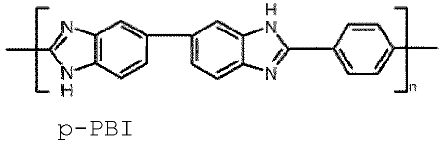

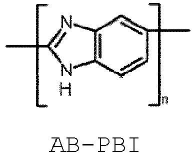

In 1995 it was found that if treated with inorganic acids like phosphoric acid (PA), hydrochloric acid and sulfuric acid (process denoted as doping), such acid doped PBI films can be used as solid polymer electrolytes in fuel cells [1]. In 2000 it was discovered, that if PBI is doped with strong bases like sodium or potassium hydroxide, it can be also applied as a solid anion-conductive polymer electrolyte [2]. A classic conductive PBI membrane comprises the polymer and the dopant (acid or base). The ratio of retained acid/base by a single polymer repeating unit is denoted as doping degree (DD) - molecules acid/base per repeating unit. For example, the Celtec^{®}-P membrane (product of BASF Fuel Cell GmbH) contains 5 wt.% p-PBI and 95 wt.% 70% phosphoric acid (PA), i.e. every PBI unit retains 40 molecules PA. In this case the DD is 40. The ion conductivity strongly depends on the temperature and water content of the membrane, i.e. the relative humidity (RH) at which the proton conductivity is measured.

Higher DD results in higher ionic conductivity. On the other hand, by increasing the DD the membrane becomes softer, and deterioration of the mechanical properties is observed.

As it is known from the state of the art, the electrochemical kinetic of PEM and AEM fuel cells and electrolyzers increases with the working temperature. PA-doped p-PBI membranes are usually operated at 160 °C. If operated above this temperature for a longer time, membranes with a very high DD (like Celtec^{®}-P) become too soft and start to flow - creep is observed. The result is deterioration of MEA performance. The same applies to highly KOH doped m- and AB-PBI membranes. In several cases, when performing conductivity measurements of such membranes at 110 °C and 100% relative humidity, softening and even melting of the membrane was observed. Another problem is the O₂, N₂ and especially hydrogen, methanol permeability through the solid polymer electrolyte membrane leading to energy losses and accelerated aging of the electrochemical devices. The ion transport selectivity is also a broadly discussed problem in RedOx flow batteries, lithium batteries and other electrochemical systems.

To solve some of the problems mentioned above, i.e. deterioration of the mechanical properties of highly doped PBI membranes at elevated temperatures, different approaches have been applied.

The simplest one is using different fillers. From the prior art the incorporation of inorganic fillers like montmorillonite (MMT, a layered zeolite) in p-PBI membranes, doped with PA or KOH, is known [3,4].

These PA doped membranes, containing MMT [3,4], exhibit higher DD than the already reported in the literature and enhanced proton conductivity compared to the same p-PBI membranes with no filler. For the KOH doped p-PBI/MMT membranes the DD and the anion conductivity are also higher than the values of the p-PBI/KOH membranes. Furthermore, for all ion-conductive MMT containing p-PBI membranes considerable improvement of the mechanical properties has been observed.

Another approach for improving the mechanical properties is the cross-linking. From the prior art different processes for preparing cross-linked PBI membranes are known. For example, m-PBI can be cross-linked in a dimethylacetamide (DMAc) solution, using dibromo-p-xylene. Such membranes have shown good mechanical stability and after doping with PA the proton conductivity reaches 120 mS.cm⁻¹. The major drawback is the elaborated procedure which includes several steps and the use of the hazardous organic solvent DMAc. This process is non-applicable for other PBIs (p-PBI, AB-PBI) which are insoluble in DMAc.

In accordance with WO 2011/003538 A1 [5] PA doped p-PBI membranes can be stabilized or cross-linked in a solution comprising phosphoric acid (PA) and aldehyde (formaldehyde, glutaraldehyde or tris(alkoxycarbonylamino) triazine).Treatment is performed at temperatures 125-160 °C for several hours. In another patent - WO 2012/127311 A1 [6] - cross-linkers like monosaccharide, oligosaccharide or polysaccharide, dissolved in PA, have been used. The reaction is carried out at 120 - 160 °C for about 8 hours. The most important feature in these two patents is the application of PA as reaction media.

Cross-linking of AB PBI has also been reported [7]. A reaction between three-arm poly(2,5-benzimidazole)s with three carboxylic acid end groups (T-ABPBI) and 3,3'-diaminobenzidine (DABI) in poly(phosphoric acid) (PPA) during the casting process is described. In another paper [8] - benzoxazine has been used as cross-linker.

Shiauwu Lai et al., Mechanical property enhancement of ultra-thin PBI membrane by electron beam irradiation for PEM fuel cell, INTERNATIONAL JOURNAL OF HYDROGEN ENERGY, ELSEVIER SCIENCE PUBLISHERS B.V., BARKING, GB, vol. 41, no. 22, 10 May 2016 (2016-05-10), pages 9556-9562, disclose ultra-thin cross-linked PBI membrane containing phosphoric acid (PA) for possible use in a fuel cell prepared by electron beam irradiation methods. L. D. LOAN, "Peroxide crosslinking reactions of polymers", PURE & APPLIED CHEMISTRY, vol. 30, no. 1-2, 1 January 1972 (1972-01-01), pages 173-180, discloses the chemical mechanism for peroxide vulcanization of rubbers.

Disadvantages of the known processes for cross-linking PBI membranes are that the processes applied are rather elaborate (time-consuming, temperature regimes), toxic solvents (DMAc) have to be used, and are not applicable for all known PBIs. It is therefore the object of the present invention to provide an easy, cost effective process for cross-linking of PBIs and preparation of ion conductive polymer electrolyte membranes therefrom, wherein this process is applicable for any polymer containing a benzimidazole ring like m-PBI, p-PBI and AB-PBI, O-PBI, O,O-PBI, etc.

This object is solved by a process in accordance with claim 1. The inventive process for mechanical stabilization of polybenzimidazoles comprises the following steps:
a) providing a porous self-supporting water-containing polybenzimidazole membrane, wherein this membrane is free of any dopant (e.g. acid or base),
b) providing a cross-linking solution comprising 0.01 - 15 wt.% of at least one peroxide compound as chemical cross-linker, wherein the cross-linker solution is free of any acid (like PA, sulphuric acid, etc.) or base (like KOH, NaOH, etc.). That the cross-linker solution is free of any acid or base is essential for the present invention as in an acidic or alkaline solution peroxides are highly unstable and rapidly decompose. It is further essential to provide a water-containing polybenzimidazole membrane before the cross-linking as any residues from the preparing of the membrane, for example PA, inhibit the cross-linking process.
c) treating the porous self-supporting water-containing polybenzimidazole membrane with the cross-linking solution at a temperature between 0 and 95 °C, for a time period of 0.5 - 90 minutes to obtain a porous cross-linked polybenzimidazole membrane,
d) washing the porous cross-linked polybenzimidazole membrane with an aqueous solution (wherein this term shall also cover deionized water) for removing excessive cross-linker residues, and
e) doping the washed porous cross-linked polybenzimidazole membrane with a doping solution comprising at least one acid, base, ionic liquid or other ion containing solutions to obtain a ion-conductive polymer electrolyte membrane.

Within this application the term "ion-conductive" polymer electrolyte membrane shall cover all membrane types which are obtainable by doping porous cross-linked polybenzimidazole membrane with a dopant selected from the group consisting of acids, bases, ionic liquids or other ion containing solutions. For instance, when doping the cross-linked PBI membrane with an acid, a proton-conductive polymer electrolyte membrane is obtained, when doping the cross-linked polybenzimidazole membrane with a base, an anion-conductive polymer electrolyte membrane is obtained.

It was found that the process as described above can be used to prepare ion conductive polymer electrolyte membranes from any polymer containing a PBI ring. The porosity of the porous self-supporting water-containing polybenzimidazole membrane enables an easier, faster, finely tuneable and more homogeneously distributed cross-linking of the PBI polymer and later on for sufficiently high DD due to the already improved mechanical properties.

According to a preferred embodiment of the present invention the porous self-supporting water-containing polybenzimidazole membrane is obtained in the following way:
A non-self-supporting (polybenzimidazole) film is cast from the polybenzimidazole solution on a proper support. After treating the film with an aqueous precipitation solution (e.g. deionized water) rapid phase transition takes place - a process known as "phase inversion", widely used for preparation of membranes for micro- and nano-filtration. The result is a porous self-supporting water-containing polybenzimidazole membrane. This process of obtaining the porous self-supporting water-containing polybenzimidazole membrane is preferred as by treating the film with the aqueous solution it is possible to rapidly replace any dopant and/or solvent from the film with ab appropriate solution (i.e. deionized water) and to initiate a rapid phase transition. During phase transition the non-supporting film precipitates rapidly, forming a porous solid phase in seconds, the solvent being exchanged with water. In accordance with the preferred embodiment described above, the porous self-supporting water-containing polybenzimidazole membrane can be prepared within few hours in a simple and uncomplicated route.

After 30 min in the bath the film is washed several times (usually ≥ 5) with water (if cast from PA or other acid it has to be washed first with diluted ammonia and then again with a deionized water). The whole process lasts ca. 3 h. Films cast from DMAc are washed in the end with a very diluted acid and then water.

The polybenzimidazole solution comprises polymers, containing repeating benzimidazole units. Some examples of highly appropriate polymers, containing benzimidazole repeat units, and their formulas are summarized below:

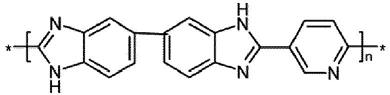

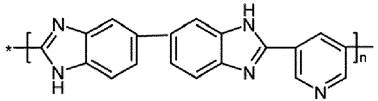

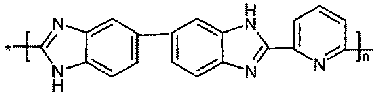

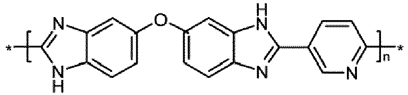

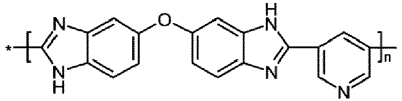

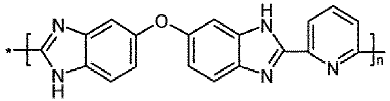

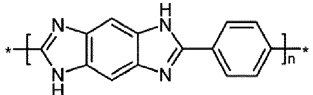

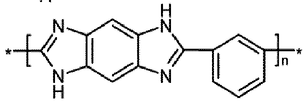

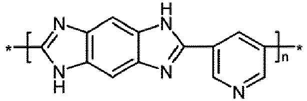

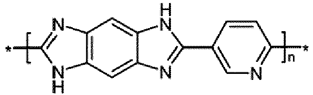

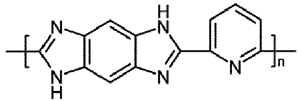

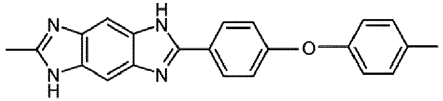

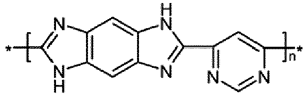

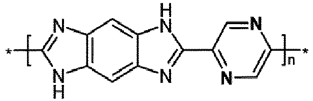

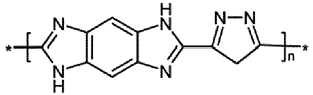

With regard to the present invention it is essential that the cross-linking solution comprises at least one peroxide as cross-linker. This peroxide may be an organic peroxide like benzoyl peroxide. In case the cross-linking solution comprises an organic peroxide, the cross-linking solution can comprize an organic solvent like acetone, dioxane, ethyl acetate and the like or mixtures thereof and water.

In a preferred embodiment of the present invention the cross-linking solution is an aqueous cross-linking solution containing at least one peroxide compound, used as cross-linker, which is completely soluble in the aqueous cross-linking solution. By providing an aqueous cross-linking solution the process step of cross-linking is very cost efficient and very uncomplicated. When inorganic peroxides, which are fully soluble in water, are used, the harmful organic solvents can be completely avoided. In this case the amount of peroxide can be very small.

It is further preferred that the cross-linking solution comprises water and at least one inorganic peroxide as cross-linker and that the cross-linking solution has a pH value preferably in the range of 6 - 8. By using deionized water as media and no additional organic solvents, the above-mentioned advantages are further enhanced. The use of an inorganic peroxide allows the usage of water only and makes it superfluous to add any organic solvent for solubility reasons. Keeping the pH value of the solution in the range of 6 - 8 (i.e. the solution is free of any strong acid or base) ensures that the peroxide is not chemically quenched.

Lower concentrations of the used cross-linker render lower amounts of impurities, which have to be removed from the membrane after cross-linking. This further reduces production costs (costs for membrane preparation). It was found that when using inorganic peroxides as cross-linker, the required amounts of cross-linker are very small. In addition, the cross-linking reaction, initiated by inorganic peroxides is very fast, even at low temperatures.

In a preferred embodiment of the inventive process the cross-linking solution comprises 0.01 - 2.0 wt.%, preferably 0.3 - 0.4 wt.%, of an inorganic peroxide. To obtain the porous cross-linked polybenzimidazole membrane, the porous self-supporting water-containing polybenzimidazole membrane is treated with the cross-linking solution at temperature in the range 20 - 60 °C for a time period of 1 - 5 minutes.

In a highly preferred embodiment of the process, the cross-linking solution comprises an inorganic peroxodisulfate as cross-linker. It was found that inorganic peroxodisulfates surpass all other peroxides (like, for example, H₂O₂, benzoyl peroxide etc.) with regard to reaction speed, amount of cross-linker required and reaction temperature. In other words, when using inorganic peroxodisulfates as cross-linkers, the smallest amount of cross-linker is necessary, the reaction is very fast and it can be carried out even at low temperatures. Furthermore, inorganic persulfates are rather inexpensive.

In an alternative embodiment of the inventive process, it is preferred that the cross-linking solution comprises an organic solvent and at least one organic peroxide as cross-linker. As mentioned above, the inventive process can be carried out with inorganic or organic peroxides making the process very flexible and universally usable.

According to a preferred embodiment of the present invention for obtaining a proton-conductive membrane, the doping is performed by treating the porous cross-linked polybenzimidazole membrane with acids for preferably 2 - 5 hours to obtain the proton-conductive polymer electrolyte membrane. This doping method is fast and uncomplicated (doping at room or elevated temperatures up to 90 °C is possible) and results in high DD. Preferably, 85% phosphoric acid is used.

In a preferred embodiment of the present invention the proton-conductive polymer electrolyte membrane is treated with 70% phosphoric acid for 2 - 5 hours for reconditioning the membrane after doping.

For obtaining an anion-conductive membrane doping is performed by treating the porous cross-linked polybenzimidazole membrane with 20 - 50 wt.% aqueous solution of a water soluble strong base, e.g. KOH, NaOH, CeOH etc. for 2 - 5 hours. The procedure is fast and uncomplicated (doping at room temperature) and results in high DD. According to another preferred embodiment of the present invention for obtaining a PBI membrane, treated with organic ionic liquids, the doping is performed by imbibing the porous cross-linked polybenzimidazole membrane in an organic ionic liquid or mixture of these, for example: 1-butyl-3-methylimidazolium chloride [BMIM]Cl, 1-butyl-3-methylimidazolium hydroxide [BMIM]OH, 1-butyl-3-methylimidazolium tetra fluoroborate [BMIM][BF4] and others, acting as good solvents for the uncross-linked PBIs.

To enhance the positive effects of the cross-linking regarding the mechanical properties, it is preferred that the porous self-supporting water-containing polybenzimidazole membrane comprises preferably between 0.5 and 50 wt.% of at least one filler, preferably montmorillonite.

While montmorillonite is a preferred inorganic filler, other fillers (or mixtures thereof) can be used. Some examples for fillers are:
- Sulfates like CsHSO₄, Fe(SO₄)₂, (NH₄)₃H(SO₄)₂), LiHSO₄, NaHSO₄, KHSO₄, RbSO₄, LiN₂H₅SO₄, NH₄HSO₄,
- Phosphates like Zr₃(PO₄)₄, Zr(HPO₄)₂, HZr₂(PO₄)₃, Ce(HPO₄)₂, Ti(HPO₄)₂, KH₂PO₄, NaH₂PO₄, LiH₂PO₄, NH₄H₂PO₄, CsH₂PO₄, CaHPO₄, MgHPO₄, HSbP₂O₈, HSb₃P₂O₁₄, H₅Sb₅P₂O₂₀, etc.
- Poly acids like H₃PW₁₂O₄₀.n H₂O (n=21-29), H₃SiW₁₂O₄₀.nH₂O (n=21-29), HₓWO₃, HSbWO₆, H₃PMo₁₂O₄₀, H₂Sb₄O₁₁, HTaWO₆, HNbO₃, HTiNbO₅, HTiTaO₅, HSbTeO₆, H₅Ti₄O₉, HSbO₃, H₂MoO₄,
- Phosphides like ZrP, TiP, HfP,
- Oxides like Al₂O₃, Sb₂O₅, ThO₂, SnO₂, ZrO₂, MoO₃,
- Silicates like zeolite, zeolite(NH₄+), layered silicates, tectosilicates, H-natrolite, H-mordenite, NH₄-analcine, NH₄-sodalite, NH₄-gallate or other condensation products of ortho silicic acid Si(OH)₄ and their salts and esters, polysiloxanes with the general formula H₃Si-(O-SiH₂)ₙ-O-SiH₃, especially other natural clay minerals, such as bentonite, kaolinite, herderite, biotite, hazenite, nontronite, beidellite,pyrophyllite, talc, chlorites, muscovite, mica, smectites, halloysite, vermiculite and hydrotalcite,
- Carbides, nitrides, oxynitrides, MAX phases, 2D phases, etc. in particular SiC, Si₃N₄, etc.
- Fibers, in particular glass fibers, glass powders and/or polymer fibers, preferably based on polyazoles, also partially cross-linked.

The present invention further relates to a proton or anion-conductive polymer electrolyte membranes and membranes imbibed in ionic liquids, obtainable by the process described above, the use of the proton or anion-conductive polymer electrolyte membranes for preparation of membrane-electrode assemblies, applicable in polymer electrolyte membrane fuel cells, electrolyzer cells, batteries, capacitors, electrochemical sensors, electrodialysis and electroosmosis devices, and all other cells and devices comprising such membranes.

### EXPERIMENTAL

The present invention will be illustrated in more details with reference to the examples below, but these examples are not intended to limit the scope of the present invention. Parts and percentages in the examples are on a weight basis, unless otherwise specified. The following examples are given by way of illustration and therefore should not be considered to limit the scope of the invention.

The essential step of the inventive process for the mechanical stabilization of polybenzimidazoles is the cross-linking of the porous self-supporting water containing polybenzimidazole membrane provided in step a) of the process.

Within the experimental part of this application the term "filled with water" is used. Within the range of this application this term shall have the same meaning as the term "water-containing" used above.

Proof that the membrane is cross-linked is based on the following findings/changes of properties:
- Change in dimensions - reduction of at least 10%
- change of color - becomes darker, almost black
- Increase of the polymer content [wt.% PBI] in the cross-linked film (filled with water), compared to the starting porous film - in the range 40 -150%
- Solubility tests - after the cross-linking the membranes are insoluble in concentrated acids and respectively in alcoholic base solutions (why exactly alcoholic solutions?) compared to the not cross-linked film)
- Mechanical properties - Cross-linked porous films (filled with water) vs. non-cross-linked: a drastic increase in the elastic modulus and a decrease in the elongation brake at. The better mechanical properties of the cross linked porous films enable achieving of high DD and therefore high ionic conductivity by preserving the superior membrane mechanical properties compared to the doped non-cross-linked films Doping degree (DD) - excluding p-PBI, cross-linked membranes can be doped (PA or KOH) to higher DD compared to the non-cross-linked ones, retaining their good mechanical properties
- Ion conductivity - PA- or KOH- doped non-cross-linked membranes usually exhibit lower ionic conductivities compared to the PA- or KOH-doped cross-linked (may contain filler) membranes.

### Measurements

All ion conductivity measurements were carried out at the Zentrum für BrennstoffzellenTechnik GmbH, Duisburg, Germany, on a Zennium electrochemical workstation Zennium (ZAHNER-elektrik GmbH & Co. KG, Germany) and a Solartron Analytical 1287 Electrochemical Interface with 1255 Impedance Phase Analyzer (Farnborough, UK). The membrane was adjusted in four electrode cells, placed in the conditioning chamber of the EasyTest Cell [9,10]. The EasyTest Cell gas chamber filled with environmental air was used for conditioning and controlling temperature and relative humidity (RH). The spectra were taken at zero DC current and AC amplitude of 100 mV.

Stress-strain curves of all samples were recorded on an INSTRON - 1185 apparatus at a cross-head speed 100 mm/min .

### Examples

### Preparation of porous PBI films, filled with water

### Example 1. Preparation of porous p-PBI film, filled with water

The reaction mixture (2 wt. % p-PBI in polyphosphoric acid) is used as a starting material. The solution is heated and stirred for 30 min under inert gas at 180 °C, then a non-self-supporting film is cast on a glass plate using a doctor blade (gap 0.6 mm). After 15 min in air (cooling down to RT) the film is dipped in a bath containing deionized water. Rapid phase inversion takes place, resulting in a solid porous film, filled with water. The film is washed at least 5 times in deionized water, then in diluted ammonia till a neutral pH (removing the residues of the acid), then again in deionized water.

### Example 2. Preparation of porous m-PBI film, filled with water

m-PBI, dissolved in dimethylacetamide (DMAc, 26 wt.% solution, product of PBI Advanced Products, denoted S26) was used as a starting material. Under stirring at 60 °C the solution is diluted with dimethylacetamide to obtain 15 wt. % solution. A non-self-supporting film is cast on a glass plate using a doctor blade (gap 0.6 mm). After 10 min in air (cooling down to room temperature) the film is dipped in a bath containing deionized water. Rapid phase inversion takes place, resulting in a solid porous film, filled with water. The film is washed at least 5 times in a deionized water, then boiled in a deionized water for 2 hours (removing the residues of DMAc).

### Example 3. Preparation of porous AB-PBI film, filled with water

The reaction mixture (6 wt. % AB-PBI in methanesulfonic acid, containing 10% phosphorus pentoxide) is used as starting material. A non-self-supporting film is cast on a glass plate using a doctor blade (gap 0.6 mm). After 10 min in air the film is dipped in a bath containing a deionized water. Rapid phase inversion takes place, resulting in a solid porous film, filled with water. The film is washed at least 5 times in a deionized water, then in diluted ammonia (removing the acid residues), then again in a deionzed water.

### Example 4. Preparation of porous AB-PBI film, containing montmorillonite (MMT), filled with water

The reaction mixture (6 wt. % AB-PBI in methanesulfonic acid, containing 10 wt.% phosphorus pentoxide - Eaton's reagent) is used as a starting material. A calculated amount of MMT (50% from the weight of the polymer in the reaction mixture) is dispersed in Eaton's reagent and under inert gas and constant stirring is slowly added to the reaction mixture. After stirring for 30 min. a non-self-supporting film is cast on a glass plate using a doctor blade (gap 0.6 mm). After 10 min in air the film is dipped in a bath containing deionized water. Rapid phase inversion takes place, resulting in a solid porous film, filled with water. The film is washed at least 5 times in a deionized water, then in diluted ammonia (removing rests of acid), then again in a deionized water.

### Cross-linking of porous PBI films with peroxides

### Example 5. Cross-linking of porous p-PBI film using potassium persulfate (KPS) as cross-linker

*Cross-linking bath:* 0.4 g potassium persulfate (K₂S₂O₈, p.a.) is dissolved in 400 ml of deionized water (Becher glass) and heated to 60 °C under magnetic stirring.

*Cross-linking:* The p-PBI film from Example 1 is immersed in the cross-linking bath for 3 min. Darkening of the color as well as a small reduction in size is observed. The film becomes stiffer.

The film is then abundantly washed with a deionized water. In this way a porous cross-linked PBI film, filled with water is obtained. It can be stored for longer time in a deionized water, desiccator (humidified air) or sealed in a pack.

*Solubility tests:* insoluble in concentarted sulfuric acid (90 °C, over 24h) and 100% PA (90 °C, over 24h).

### Mechanical properties:

| p-PBI film | Elastic modulus E [MPa] | Elongation at brake A [%] |
|---|---|---|
| p-PBI film before treatment with KPS (non-cross-linked) | 2.1 | 150 |
| p-PBI film after treatment with KPS 3 min (cross-linked) | 21.5 | 8.0 |

### Example 6. Cross-linking of porous p-PBI film using benzoyl peroxide (BPO) as cross-linker

*Cross-linking bath:* 10 wt. % BPO in acetone/water 9:1 preheated at 60 °C.

*Cross-linking:* the porous p-PBI film from Example 1 is immersed in the bath and after 10 min the film changes its color and dimensions. The film, treated 30 min, swells too much in 100% PA, while the one treated for 60 min shows negligible dimension change. The film is then abundantly washed with a deionized water. In this way a porous cross-linked PBI film, filled with a deionized water is obtained. Can be stored for longer time in water, desiccator (humidified air) or sealed in a pack.

*Solubility tests:* insoluble in concentrated sulfuric acid (90 °C, over 24h) and 100% PA (90 °C, over 24h)

### Mechanical properties:

| Sample | Elastic modulus E (MPa) | Elongation at brake (%) |
|---|---|---|
| p-PBI film before treatment with BPO (non-cross-linked) | 2.3 | 176 |
| p-PBI film after treatment with BPO 3 min (cross-linked) | 73.5 | 14.4 |

### Example 7. Cross-linking of porous m-PBI film using ammonium persulfate (APS) as cross-linker

*Cross-linking bath:* 0.5 wt. % ammonium persulfate in water, preheated at 60 °C.

*Cross-linking:* the porous m-PBI film from Example 2 is immersed in the bath for 5 min. The color changes to almost black, reduction in the dimensions is observed. The contents of PBI in the film increases from 22 wt. % in the starting film to 52 wt.% in the treated film. The film is then abundantly washed with water. In this way a porous cross-linked PBI film, filled with water is obtained. It can be stored for longer time in a deionized water, desiccator (humidified air) or sealed in a pack.

*Solubility tests:* insoluble in concentrated sulfuric acid (90 °C, over 24h) and 100% PA (90 °C, over 24h)

### Mechanical properties:

| Sample | Elastic modulus E (MPa) | Elongation at brake (%) |
|---|---|---|
| m-PBI film before treatment with APS (non-cross-linked) | 36 | 7.8 |
| m-PBI film after treatment with APS (cross-linked) | 58 | 5.2 |

### Example 8. Cross-linking of porous AB-PBI film using potassium persulfate (KPS) as cross-linker

*Cross-linking bath:* 0.5 wt. % potassium persulfate in water, preheated at 60 °C.

*Cross-linking:* The porous AB-PBI film from Example 3 is immersed in the bath for 5 min. The color changes to almost black, reduction in the dimensions is observed. The contents of PBI in the film increases from 18 wt. % in the starting film to 34 wt.% in the treated film. The film is then abundantly washed with a deionized water. In this way a porous cross-linked PBI film, filled with a deionized water is obtained. It can be stored for longer time in a deionized water, desiccator (humidified air) or sealed in a pack.

*Solubility tests:* insoluble in concentrated sulfuric acid (90 °C, over 24h) and 100% PA (90 °C, over 24h)

### Mechanical properties:

| Sample | Elastic modulus E (MPa) | Elongation at brake (%) |
|---|---|---|
| AB-PBI film before treatment with KPS (non-cross-linked) | 12.1 | 25.6 |
| AB-PBI film after treatment with KPS (cross-linked) | 20.5 | 15.2 |

### Example 9. Cross-linking of porous AB-PBI film, containing montmorillonite (MMT,) with potassium persulfate (KPS) as cross-linker

*Cross-linking bath:* 0.5 wt. % potassium persulfate in water, preheated at 60 °C.

*Cross-linking:* the porous AB-PBI film, containing MMT from Example 4 is immersed in the bath for 5 min. The color changes to almost black and reduction in the dimensions is observed. The film is then abundantly washed with a deionized water. In this way a porous cross-linked PBI film, filled with a deionized water is obtained. It can be stored for longer time in a deionized water, desiccator (humidified air) or sealed in a pack.

*Solubility tests:* insoluble in concentrated sulfuric acid (90°C, over 24h) and 100% PA (90°C, over 24h)

### Mechanical properties:

| Sample | Elastic modulus E (MPa) | Elongation at brake (%) |
|---|---|---|
| AB-PBI/MMT film before treatment with KPS (non-cross-linked) | 27.8 | 39.8 |
| AB-PBI/MMT film after treatment with KPS (cross-linked) | 51.1 | 29.8 |

### Preparation of ion conductive membranes

### Example 10. Preparation of cross-linked proton conductive p-PBI membrane (doped with PA)

The wet cross-linked p-PBI film from Example 5 is immersed in a bath containing 85% phosphoric acid (RT) and kept in it for at least 6 hours. The water from the membrane is exchange with PA. The membrane is then treated in a second bath, containing 70% PA for several hours at RT, taken out, gently wiped for removing excessive PA and sealed in a pack.

*Solubility tests:* PA doped cross-linked p-PBI is insoluble in concentrated sulfuric acid (90 °C, over 24h) and 100% PA (90 °C, over 24h)

### Mechanical properties:

| Sample | Elastic modulus E, [MPa] | Elongation at brake A, [%] |
|---|---|---|
| p-PBI (DD = 40) non-cross-linked | 3.2 | 180 |
| p-PBI (DD = 38) cross-linked | 10.3 | 46 |

*Proton conductivity (mS.cm⁻¹*), measured at 180 °C and different relative humidities (RH): PA doped cross-linked p-PBI RH 5 % - 178; RH 10 % - 233; RH 15 % - 266; RH 20% - 367.

### Example 11. Preparation of cross-linked proton conductive m-PBI membrane (doped with PA)

The wet cross-linked m-PBI film from Example 5 is immersed in a bath containing 85% phosphoric acid at room temperature and kept in it for at least 6 hours. The water from the membrane is exchange with PA. The membrane is then treated in a second bath, containing 70% PA for several hours, taken out, gently wiped for removing excessive PA and sealed in a pack.

*Solubility tests:* insoluble in concentrated sulfuric acid (90 °C, over 24h) and 100% PA (90 °C, over 24h)

### Mechanical properties:

| Sample | Elastic modulus E (MPa) | Elongation at brake (%) |
|---|---|---|
| m-PBI/PA (DD = 21), cross-linked | 12.2 | 16.8 |

*Proton conductivity (mS.cm⁻¹*), measured at 180 °C and different relative humidity (RH): PA doped cross-linked m-PBI RH 5 % = 152; RH 10 % - 181; RH 15 % - 205; RH 20% - 217

### Example 12. Preparation of cross-linked proton conductive AB-PBI membrane (doped with PA)

The wet cross-linked AB-PBI film from Example 8 is immersed in a bath containing 85% phosphoric acid at a room temperature and kept in it for at least 6 hours. The water from the membrane is exchange with PA. The membrane is then treated in a second bath, containing 70% PA for several hours, taken out, gently wiped for removing excessive PA and sealed in a pack.

*Solubility tests:* insoluble in concentrated sulfuric acid (90 °C, over 24h) and 100% PA (90 °C, over 24h)

### Mechanical properties:

| Sample | Elastic modulus E (MPa) | Elongation at brake (%) |
|---|---|---|
| AB-PBI/PA membrane (DD = 23,) cross-linked | 3.8 | 29 |

*Proton conductivity (mS.cm⁻¹*), measured at 180 °C and different relative humidity (RH): PA doped cross-linked AB-PBI RH 5 % = 342; RH 10 % - 375; RH 15 % - 399; RH 20% - 410;

### Example 13. Preparation of cross-linked anion conductive p-PBI membrane (doped with KOH)

The wet cross-linked p-PBI film from Example 5 is immersed in a bath containing 50% KOH water solution and kept in it for at least 6 hours. The water from the membrane is exchanged with KOH solution. The membrane is then taken out, gently wiped for removing excessive dopant solution and sealed in a pack.

*Solubility tests:* insoluble in 10 to 20 wt. % ethanolic or methanolic KOH solution at RT; no changes in dimensions after treatment with hot water vapor at T = 110°C for 5 min.; after washing with a deionized water, diluted ammonia and again a deionized water - insoluble in concentrated sulfuric acid (90 °C, over 24h) and 100% PA (90 °C, over 24h) .

### Mechanical properties:

| Sample | Elastic modulus E [MPa] | Elongation at brake A [%] |
|---|---|---|
| p-PBI (DD = 17), non-cross-linked | 10.5 | 105 |
| p-PBI (DD = 15.5), cross-linked | 13.2 | 65 |

*Anion conductivity (mS.cm¹*), measured at 110 °C and different relative humidity (RH): KOH doped cross-linked p-PBI RH 50% - 316; RH 80% - 800; RH 100% - 894

### Example 14. Preparation of cross-linked anion conductive m-PBI membrane (doped with KOH)

The wet cross-linked m-PBI film from Example 7 is immersed in a bath containing 50% KOH water solution and kept in it for at least 6 hours. The water from the membrane is exchanged with KOH solution. The membrane is then taken out, gently wiped for removing excessive dopant solution and sealed in a pack.

*Solubility tests:* insoluble in 10 to 20 wt. % ethanolic or methanolic KOH solution at RT;_no changes in dimensions after treatment with hot water vapor at T = 110°C for 5 min.; after washing with water, diluted ammonia and water - insoluble in concentrated sulfuric acid (90 °C, over 24h) and 100% PA (90 °C, over 24h).

### Mechanical properties

| Sample | Elastic modulus E (MPa) | Elongation at brake (%) |
|---|---|---|
| m-PBI/KOH (DD = 13), Cross-linked | 66 | 8.1 |

*Anion conductivity (mS.cm¹*), measured at 110 °C and different relative humidity (RH): KOH doped cross-linked m-PBI RH 50% - 112; RH 80% - 209; RH 100% - 318

### Example 15. Preparation of cross-linked anion conductive AB-PBI membrane (doped with KOH)

The wet cross-linked AB-PBI film from Example 8 is immersed in a bath containing 50% KOH water solution and kept in it for at least 6 hours. The water from the membrane is exchanged with KOH solution. The membrane is then taken out, gently wiped for removing excessive dopant solution and sealed in a pack.

*Solubility tests:* insoluble in 10 to 20 wt. % ethanolic or methanolic KOH solution at room temperature;_no changes in dimensions after treatment with hot water vapor at T = 110 °C for 5 min.; after washing with water, diluted ammonia and water - insoluble in concentrated sulfuric acid (90 °C, over 24h) and 100% PA (90 °C, over 24h)

### Mechanical properties

| Sample | Elastic modulus E (MPa) | Elongation at brake (%) |
|---|---|---|
| AB-PBI/KOH (DD = 16), Cross-linked | 3.03 | 84.74 |

*Anion conductivity (mS.cm¹*), measured at 110 °C and different relative humidity (RH): KOH doped cross-linked AB-PBI RH 50% - 115; RH 80% - 348; RH 100% - 770

### Example 16. Preparation of cross-linked anion conductive AB-PBI membrane, containing montmorillonite (MMT), (doped with KOH)

The wet cross-linked AB-PBI/MMT film from Example 9 is immersed in a bath containing 50% KOH water solution and kept in it for at least 6 hours. The water from the membrane is exchanged with KOH solution. The membrane is then taken out, gently wiped for removing excessive dopant solution and sealed in a pack.

*Solubility tests:* insoluble in 10 to 20 wt. % ethanolic or methanolic KOH solution at room temperature;_no changes in dimensions after treatment with hot water vapor at T = 110 °C for 5 min.; after washing with water, diluted ammonia and water - insoluble in concentrated sulfuric acid (90 °C, over 24h) and 100% PA (90 °C, over 24h)

### Mechanical properties

| Sample | Elastic modulus E (MPa) | Elongation at brake (%) |
|---|---|---|
| AB PBI/MMT membrane (DD = 21), non-cross-linked | 3.42 | 212 |
| AB PBI/ MMT membrane (DD = 22), cross-linked | 18.4 | 162 |

*Anion conductivity (mS.cm⁻¹*), measured at 110 °C and different relative humidity (RH): KOH doped cross-linked AB-PBI/MMT RH 50% - 427; RH 80% - 999; RH 100% - 1245

### Results

### Mechanical properties

Table 1 summarizes the results from the stress-strain measurements of PBI membranes, filled with water (non-cross-linked and cross-linked) in accordance with Examples 5 - 9.

**Table 1. Mechanical properties of non-doped PBI membranes, filled with water: elastic modulus (a) and elongation break (b)**

| (a) | | |
|---|---|---|
| Sample | Elastic modulus E, [MPa] | |
| | Cross-linked | Non-cross-linked |
| p-PBI film (cross-linker KPS) | 21.5 | 2.1 |
| p-PBI film (cross-linker BPO) | 73.5 | 2.3 |
| m-PBI film (cross-linker APS) | 58.0 | 36.0 |
| AB-PBI film (cross-linker KPS) | 20.5 | 12.1 |
| AB-PBI/MMT film (cross-linker KPS) | 51.1 | 29.8 |

| (b) | | |
|---|---|---|
| Sample | Elongation at brake A, [%] | |
| | Cross-linked | Non-cross-linked |
| p-PBI film (cross-linker KPS) | 8.0 | 150.0 |
| p-PBI film (cross-linker BPO) | 14.4 | 176.0 |
| m-PBI film (cross-linker APS) | 5.2 | 7.8 |
| AB-PBI film (cross-linker KPS) | 15.2 | 25.6 |
| AB-PBI/MMT film (cross-linker KPS) | 29.8 | 39.8 |

As can be seen from table 1, the mechanical properties of all cross-linked membranes are considerably enhanced compared to the non-cross-linked ones. The elastic modulus E is increased (table 1 a), and the elongation at break is reduced (table 1 b). The inventive process operates with all organic and inorganic peroxides, best results being obtained with persulfates. In this case the cross-linking can be performed in water, without the use of toxic solvents.

Table 2 summarizes the results from the stress-strain measurements of PBI-membranes, doped with PA (non-cross-linked and cross-linked) in accordance with Examples 10, 11 and 12. P-PBI (non-cross-linked), doped with PA is given as reference.

**Table 2. Mechanical properties of PA doped PBI membranes**

| Membranes | Elastic modulus, [MPa] | Elongation at break, [%] |
|---|---|---|
| p-PBI, non-cross-linked, DD=40 | 3.2 | 180 |
| p-PBI, cross-linked with KPS, DD=38 | 10.3 | 46 |
| m-PBI, cross-linked with APS, DD=21 | 12.2 | 17 |
| AB-PBI, cross-linked with KPS, DD=2 3 | 3.8 | 29 |

As can be seen, the mechanical properties of all cross-linked PA-doped PBI membranes are still excellent even though the DD of the membranes is very high. At DD degrees above 11-12 m- and AB PBI become extremely soft.

Table 3 summarizes the results from the stress-strain measurements of PBI-membranes, doped with KOH (non-cross-linked and cross-linked) in accordance with Examples 13 - 16.

**Table 3. Mechanical properties of KOH doped PBI membranes**

| Membranes | Elastic modulus, [MPa] | Elongation at break, [%] |
|---|---|---|
| p-PBI, non-cross-linked, DD=17 | 10.5 | 105 |
| p-PBI, cross-linked with KPS, DD=15.5 | 13.2 | 65 |
| m-PBI, cross-linked with APS, DD=13 | 66 | 8 |
| AB-PBI, cross-linked, DD=16 | 3 | 85 |
| AB-PBI/MMT, cross-linked with KPS, DD=22 | 18.4 | 162 |

The results obtained confirm that the mechanical properties of the cross-linked KOH-doped membranes are still excellent even though the DD of the membranes is very high. The cross-linking definitively improves the mechanical properties and on the other hand allows very high DD, especially for m- and AB-PBI. Such DD (12-22 moles KOH per PBI unit) cannot be achieved with non-cross-linked m- and AB-PBI.

### Solubility

As membranes are operated at very harsh conditions (high acidity or basicity, high temperatures), they have to fulfill stringent requirements. Most important are high ionic conductivity, good mechanical properties, long term thermal and chemical stability, low gas permeability and high selectivity of the ion conduction.

It is well known, that cross-linked polymers are mostly insoluble - usually only swelling is observed. If a polymer after treatment with cross-linker becomes insoluble in a solvent, in which the starting polymer fully dissolves, this can be regarded as unambiguous proof that it is cross-linked. Therefore, a series of solubility tests have been reported for the membranes, stabilized in accordance with the inventive process. All cross-linked PBI membranes (Examples 5 - 9) are insoluble in concentrated sulfuric acid (90 °C, over 24 h) and 100% PA (90 °C, over 24 h). The same is valid for the PA doped cross-linked PBI membranes. The KOH-doped membranes are insoluble in 10 to 20 wt.% ethanolic or methanolic KOH solution at room temperature. They undergo no changes in dimensions after a treatment with hot water vapor at T = 110 °C for 5 min. After washing with a deionized water, diluted ammonia and again a deionized water they are insoluble in concentrated sulfuric acid (90 °C, over 24 h) and 100% PA (90 °C, over 24 h). No pristine membrane (m, p- or AB-PBI - filled with water or doped with PA or KOH withstands the solubility tests.

### Conductivity

Results from the conductivity measurements of PA doped PBI membranes (non-cross-linked and cross-linked) measured at different temperatures and relative humidity are summarized in Table 4.

**Table.4 Proton conductivity of PBI membranes, doped with PA, measured at different temperatures (T) and relative humidity (RH) .**

| Membranes | T, [°C] | Proton conductivity, [mS.cm⁻¹] | | | |
|---|---|---|---|---|---|
| | | RH 5% | RH 10% | RH 15% | RH 20% |
| Celtec^{®}P | 160 | 158 | 184 | 201 | 219 |
| p-PBI, cross-linked with KPS | 180 | 178 | 233 | 266 | 367 |
| m-PBI (non-cross-linked) | 160 | - | - | - | 95 |
| m-PBI, cross-linked with KPS | 180 | 152 | 181 | 205 | 217 |
| AB-PBI, cross-linked with KPS | 180 | 342 | 375 | 399 | 410 |

From the data presented in table 4 it can be concluded that the cross-linked membranes have a much higher proton conductivity than the non-cross-linked reference membranes in accordance with the prior art. The proton conductivity of the PA doped cross-linked m-PBI membrane is in the range of the best prior art p-PBI membrane (Celtic^{®} P). Due to the procedure applied for the synthesis of p-PBI (solvent PPA (stirring for more than 24h at temperatures from 160 to 220 °C), the production costs are much higher (up to 5 times) than these for the preparation of (the costs for preparing) m- and AB-PBI. The proton conductivity of the cross-linked AB-PBI, doped with PA, is about two times higher than that of the Celtec^{®} P membrane at all RHs. For cross-linked m-PBI, doped with PA, the conductivity is practically the same as this of Celtec^{®} P. Hence, with the inventive process it is possible to prepare membranes with significantly improved characteristics, e.g.conductivity, mechanical properties at lower cost and to avoide toxic solvents in the cross-linking step than the known from the state of the art.

Results from the conductivity measurements of cross-linked KOH doped PBI membranes, measured at 110 °C and different relative humidities are presented in Table 5.

**Table 5. Anion conductivity of PBI membranes, cross-linked with KPS, doped with 50% KOH, measured at 110 °C and different relative humidity (RH).**

| Membrane | Anion conductivity, [mS.cm⁻¹] | | |
|---|---|---|---|
| | RH 50% | RH 80% | RH 100% |
| p-PBI | 316 | 800 | 894 |
| m-PBI | 112 | 209 | 318 |
| AB-PBI | 384 | 589 | 770 |
| AB-PBI/MMT | 427 | 999 | 1245 |

The same phenomenon - considerable increase of the anion conductivity - is observed for all KOH doped cross-linked PBI membranes (excluding p-PBI, where the anion conductivity is a little bit lower than that of the non-cross-linked sample, but at significantly improved mechanical properties) - for m-, AB- and AB-PBI/MMT the anion conductivity is much higher than the one reported in the prior art for the same but non-cross-linked materials.

Example 16 shows that the properties of the AB-PBI/50% MMT membrane prepared in accordance with the inventive process are excellent, superior to all OH⁻-conductive membranes of the prior art with regard to the anion conductivity (about 10 times higher than the highest reported in the literature). The membrane can compete with the p-PBI membrane doped with 50%KOH in every aspect - ease of preparation, costs, better mechanical properties and even higher OH⁻ conductivity.

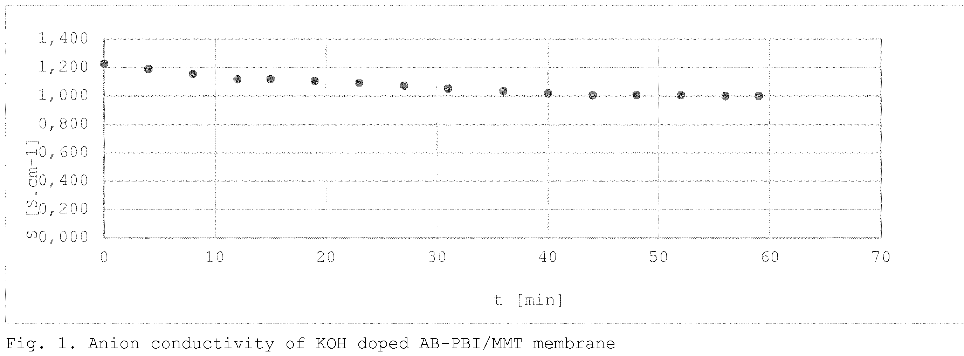

Figure 1 shows the amendment of the anion conductivity of a cross-linked AB-PBI/MMT membrane doped with KOH (DD - 22 mol KOH/PBI unit) at 110 °C and 80% RH over a time of 60 minutes. As can be seen from this figure, the drop of anion conductivity is very small and after 30 min the conductivity becomes practically constant.

The inventive process for the mechanical stabilization of PBIs can be applied not only to p-, m- and AB-PBI but to every polymer with benzimidazole rings in the chain. Compared to the non-cross-linked PA or KOH doped membranes, the cross-linked ones exhibit much better mechanical properties, as well as usually higher ion conductivity. The doping with PA and KOH should be considered as an example and not limited for all of the other possible dopants. A further advantage is the possibility of using water and aqueous solutions for the cross-linking step and the low costs of the cross-linkers as such. The process is therefore very flexible and cost-effective compared to the known processes.

### References

[1] Wainright J.S., Wang J.T., Weng D., Savinell R.F., Litt M., J. Electrochem. Soc., 142: L121, 1995.
[2] Xing B., Savadogo O., Electrochem. Commun. 2, 697-702, 2000.
[3] Ublekov F., Penchev Hr., Georgiev V., Radev Iv., Sinigersky V., Materials Letters, Volume 135, 5-7, 2014.
[4] Ublekov F., Radev Iv., Sinigersky, V., Natova, M., Penchev, H, Materials Letters, Volume 219, 131-133, 2018.
[5] WO 2011/003538 A1.
[6] WO 2012/127311 A1.
[7] Sung-KonKim, Tae-Ho Kim,Taeyun Ko, Jong-Chan Lee, Journal of Membrane Science 373(1-2),80-88, 2011.
[8] Diaz Liliana A., Hnat Jaromír, Heredia Nayra, Bruno Mariano M., Federico A. Viva, Paidar Martin, Corti Horacio R., Bouzek Karel, Abuin Graciela C., Journal of Power Sources 312, 128-136, 2016.
[9] I. Radev, E. Slavcheva, E. Budevski, Investigation of nanostructured platinum based membrane electrode assemblies in "EasyTest" cell, Int J Hydrogen Energy, 32 (7), 872-877, 2007.
[10] I Radev, G Georgiev, V Sinigersky, E Slavcheva, Proton conductivity measurements of PEM performed in EasyTest Cell, Int J Hydrogen Energy, 33 (18), 4849-4855, 2008.

## Claims

1. A process for mechanical stabilization of polybenzimidazoles comprising the steps of:
a) providing a porous self-supporting water-containing polybenzimidazole membrane,
b) providing a cross-linking solution comprising 0.01 - 15 wt.% of at least one peroxide compound as chemical cross-linker, the cross-linker solution is free of any acid or base,
c) treating the porous self-supporting water-containing polybenzimidazole membrane with the cross-linking solution at a temperature between 0 and 95 °C for a time period of 0.5 - 90 minutes to obtain a porous cross-linked polybenzimidazole membrane,
d) washing the porous cross-linked polybenzimidazole membrane with an aqueous solution for removing excessive cross-linker residues, and
e) doping the washed porous cross-linked polybenzimidazole membrane with a doping solution comprising at least one acid, base or an ionic liquid to obtain an ion-conductive polymer electrolyte membrane.

2. The process for mechanical stabilization of polybenzimidazoles according to claim 1, **characterized in that** the porous self-supporting water-containing polybenzimidazole membrane is obtained by casting a polybenzimidazole solution on a support to obtain a polybenzimidazole film and treating the film with an aqueous precipitation solution to initiate a phase transition to obtain the porous self-supporting, water-containing polybenzimidazole membrane.

3. The process for mechanical stabilization of polybenzimidazoles according to any of the preceding claims, **characterized in that** the cross-linking solution is an aqueous cross-linking solution and that the at least one peroxide compound, used as cross-linker, is completely soluble in the aqueous cross-linking solution.

4. The process for mechanical stabilization of polybenzimidazoles according to any of the preceding claims, **characterized in that** the cross-linking solution comprises water and at least one inorganic peroxide as cross-linker and that the cross-linking solution has a pH value in the range of 6 - 8.

5. The process for mechanical stabilization of polybenzimidazoles according to claim 4, **characterized in that** the cross-linking solution comprises 0.01 - 2.0 wt.%, preferably 0.3 - 0.4 wt.%, of an inorganic peroxide and that the porous self-supporting water-containing polybenzimidazole membrane is treated with the cross-linking solution at a temperature between 20 and 60°C for a time period of 1 - 5 minutes to obtain the porous cross-linked polybenzimidazole membrane.

6. The process for mechanical stabilization of polybenzimidazoles according to claim 4 or 5, **characterized in that** the peroxide based cross-linking solution comprises an inorganic peroxodisulfate as cross-linker.

7. The process for mechanical stabilization of polybenzimidazoles according to any of the claims 1 - 3, **characterized in that** the cross-linking solution comprises an organic solvent and at least one organic peroxide as cross-linker.

8. The process for mechanical stabilization of polybenzimidazoles according to any of the preceding claims, **characterized in that** doping is achieved by treating the porous cross-linked polybenzimidazole membrane with a dopant selected from the group consisting of phosphoric acid and sulphuric acid for 2 - 5 hours to obtain the proton-conductive polymer electrolyte membrane.

9. The process for mechanical stabilization of polybenzimidazoles according to any of the claims 1 - 7, **characterized in that** doping is achieved by treating the porous cross-linked polybenzimidazole membrane with at least one ionic liquid for 2 - 5 hours to obtain the ion-conductive polymer electrolyte membrane.

10. The process for mechanical stabilization of polybenzimidazoles according to any of the claims 1 - 7, **characterized in that** the proton-conductive polymer electrolyte membrane is treated with 70% phosphoric acid for 2 - 5 hours.

11. The process for mechanical stabilization of polybenzimidazoles according to any of the claim 1 - 7, **characterized in that** doping is performed by treating the porous cross-linked polybenzimidazole membrane with 20 - 50 wt.% aqueous solution of a water soluble strong inorganic base for 2 - 5 hours.

12. The process for mechanical stabilization of polybenzimidazoles according to any of the claims 1 - 12, **characterized in that** the porous self-supporting water-containing polybenzimidazole membrane comprises between 0.5 and 50 wt.% of inorganic filler, preferably montmorillonite.

13. An ion-conductive polymer electrolyte membrane obtainable by the process according to any of the claims 1 - 13.

14. Use of an ion-conductive polymer electrolyte membrane according to claim 14 for making a polymer electrolyte membrane fuel cell and/or membrane electrode assemblies (MEAs) therefrom.

15. A polymer electrolyte membrane fuel cell comprising an ion-conductive polymer electrolyte membrane according to claim 14.

## Patentansprüche

1. Verfahren zur mechanischen Stabilisation von Polybenzimidazolen, das die folgenden Schritte umfasst:
a) Bereitstellen einer porösen, selbsttragenden, wasserhaltigen Polybenzimidazol-Membran,
b) Bereitstellen einer Vernetzungslösung, die 0,01-15 Gew.-% mindestens einer Peroxidverbindung als chemischen Vernetzer umfasst, wobei die Vernetzungslösung frei von jeglicher Säure oder Base ist,
c) Behandeln der porösen selbsttragenden wasserhaltigen Polybenzimidazol-Membran mit der Vernetzungslösung bei einer Temperatur zwischen 0 und 95 °C für einen Zeitraum von 0,5 - 90 Minuten, um eine poröse vernetzte Polybenzimidazol-Membran zu erhalten,
d) Waschen der porösen vernetzten Polybenzimidazol-Membran mit einer wässrigen Lösung zur Entfernung überschüssiger Vernetzer-Rückstände und
e) Dotieren der gewaschenen porösen vernetzten Polybenzimidazol-Membran mit einer Dotierlösung, die mindestens eine Säure, Base oder eine ionische Flüssigkeit umfasst, um eine ionenleitende Polymerelektrolytmembran zu erhalten.

2. Verfahren zur mechanischen Stabilisation von Polybenzimidazolen gemäß Anspruch 1, **dadurch gekennzeichnet, dass** die poröse selbsttragende wasserhaltige Polybenzimidazol-Membran erhalten wird durch Gießen einer Polybenzimidazol-Lösung auf einen Träger, um einen Polybenzimidazol-Film zu erhalten, und Behandeln des Films mit einer wässrigen Fällungslösung, um einen Phasenübergang einzuleiten, um die poröse selbsttragende wasserhaltige Polybenzimidazol-Membran zu erhalten.

3. Verfahren zur mechanischen Stabilisation von Polybenzimidazolen gemäß einem der vorstehenden Ansprüche, **dadurch gekennzeichnet, dass** die Vernetzungslösung eine wässrige Vernetzungslösung ist und dass die mindestens eine Peroxidverbindung, die als Vernetzungsmittel verwendet wird, in der wässrigen Vernetzungslösung vollständig löslich ist.

4. Verfahren zur mechanischen Stabilisation von Polybenzimidazolen gemäß einem der vorstehenden Ansprüche, **dadurch gekennzeichnet, dass** die Vernetzungslösung Wasser und mindestens ein anorganisches Peroxid als Vernetzungsmittel umfasst und dass die Vernetzungslösung einen pH-Wert im Bereich von 6 - 8 aufweist.

5. Verfahren zur mechanischen Stabilisation von Polybenzimidazolen nach Anspruch 4, **dadurch gekennzeichnet, dass** die Vernetzungslösung 0,01 - 2,0 Gew.-%, vorzugsweise 0,3 - 0,4 Gew.-%, eines anorganischen Peroxids umfasst und dass die poröse selbsttragende wasserhaltige Polybenzimidazol-Membran mit der Vernetzungslösung bei einer Temperatur zwischen 20 und 60 °C für einen Zeitraum von 1 - 5 Minuten behandelt wird, um die poröse vernetzte Polybenzimidazol-Membran zu erhalten.

6. Verfahren zur mechanischen Stabilisation von Polybenzimidazolen gemäß Anspruch 4 oder 5, **dadurch gekennzeichnet, dass** die Vernetzungslösung auf Peroxidbasis ein anorganisches Peroxodisulfat als Vernetzungsmittel umfasst.

7. Verfahren zur mechanischen Stabilisation von Polybenzimidazolen gemäß einem der Ansprüche 1 - 3, **dadurch gekennzeichnet, dass** die Vernetzungslösung ein organisches Lösungsmittel und mindestens ein organisches Peroxid als Vernetzungsmittel umfasst.

8. Verfahren zur mechanischen Stabilisation von Polybenzimidazolen gemäß einem der vorstehenden Ansprüche, **dadurch gekennzeichnet, dass** die Dotierung durch Behandlung der porösen vernetzten Polybenzimidazol-Membran mit einem Dotiermittel für 2 - 5 Stunden erreicht wird, das aus der Gruppe ausgewählt ist, die aus Phosphorsäure und Schwefelsäure besteht, , um die protonenleitende Polymerelektrolytmembran zu erhalten.

9. Verfahren zur mechanischen Stabilisation von Polybenzimidazolen gemäß einem der Ansprüche 1 - 7, **dadurch gekennzeichnet, dass** die Dotierung durch Behandlung der porösen vernetzten Polybenzimidazol-Membran mit mindestens einer ionischen Flüssigkeit für 2 - 5 Stunden erreicht wird, um die ionenleitende Polymerelektrolytmembran zu erhalten.

10. Verfahren zur mechanischen Stabilisation von Polybenzimidazolen gemäß einem der Ansprüche 1 - 7, **dadurch gekennzeichnet, dass** die protonenleitende Polymerelektrolytmembran 2 - 5 Stunden lang mit 70 %iger Phosphorsäure behandelt wird.

11. Verfahren zur mechanischen Stabilisation von Polybenzimidazolen gemäß einem der Ansprüche 1 - 7, **dadurch gekennzeichnet, dass** die Dotierung durch Behandlung der porösen vernetzten Polybenzimidazol-Membran mit 20 - 50 Gew.-% wässriger Lösung einer wasserlöslichen starken anorganischen Base für 2 - 5 Stunden durchgeführt wird.

12. Verfahren zur mechanischen Stabilisation von Polybenzimidazolen gemäß einem der Ansprüche 1 - 12, **dadurch gekennzeichnet, dass** die poröse selbsttragende wasserhaltige Polybenzimidazol-Membran zwischen 0,5 und 50 Gew.-% anorganischen Füllstoff, vorzugsweise Montmorillonit, umfasst.

13. Eine ionenleitende Polymerelektrolytmembran, die durch das Verfahren gemäß einem der Ansprüche 1 - 13 erhältlich ist.

14. Verwendung einer ionenleitenden Polymerelektrolytmembran gemäß Anspruch 14 zur Herstellung einer Polymerelektrolytmembran-Brennstoffzelle und/oder Membran-Elektroden-Einheiten (MEAs) daraus.

15. Polymerelektrolytmembran-Brennstoffzelle, umfassend eine ionenleitende Polymerelektrolytmembran gemäß Anspruch 14.

## Revendications

1. Procédé de stabilisation mécanique des polybenzimidazoles comprenant les étapes suivantes
a) fournir une membrane poreuse autoportante de polybenzimidazole contenant de l'eau,
b) fournir une solution de réticulation comprenant 0,01 - 15 % en poids d'au moins un composé peroxyde comme réticulant chimique, la solution de réticulation étant exempte de tout acide ou base,
c) traiter la membrane poreuse autoportante en polybenzimidazole contenant de l'eau avec la solution de réticulation à une température comprise entre 0 et 95 °C pendant une durée de 0,5 à 90 minutes pour obtenir une membrane poreuse en polybenzimidazole réticulé,
d) lavage de la membrane poreuse de polybenzimidazole réticulé avec une solution aqueuse pour éliminer les résidus excessifs de réticulation, et
e) dopage de la membrane poreuse réticulée en polybenzimidazole lavée avec une solution de dopage comprenant au moins un acide, une base ou un liquide ionique pour obtenir une membrane électrolyte polymère conductrice d'ions.

2. Procédé de stabilisation mécanique des polybenzimidazoles selon la revendication 1, **caractérisé en ce que** la membrane poreuse autoportante de polybenzimidazole contenant de l'eau est obtenue en coulant une solution de polybenzimidazole sur un support pour obtenir un film de polybenzimidazole et en traitant le film avec une solution aqueuse de précipitation pour initier une transition de phase afin d'obtenir la membrane poreuse autoportante de polybenzimidazole contenant de l'eau.

3. Procédé de stabilisation mécanique des polybenzimidazoles selon l'une quelconque des revendications précédentes, **caractérisé en ce que** la solution de réticulation est une solution aqueuse de réticulation et **en ce que** l'au moins un composé peroxyde, utilisé comme réticulant, est complètement soluble dans la solution aqueuse de réticulation.

4. Procédé de stabilisation mécanique des polybenzimidazoles selon l'une quelconque des revendications précédentes, **caractérisé en ce que** la solution de réticulation comprend de l'eau et au moins un peroxyde inorganique comme réticulant et **en ce que** la solution de réticulation a un valeur pH compris entre 6 et 8.

5. Procédé de stabilisation mécanique des polybenzimidazoles selon la revendication 4, **caractérisé en ce que** la solution de réticulation comprend 0,01 - 2,0 % en poids, de préférence 0,3 - 0,4 % en poids, d'un peroxyde inorganique et **en ce que** la membrane poreuse autoportante de polybenzimidazole contenant de l'eau est traitée avec la solution de réticulation à une température comprise entre 20 et 60°C pendant une période de temps de 1 - 5 minutes pour obtenir la membrane poreuse de polybenzimidazole réticulée.

6. Procédé de stabilisation mécanique des polybenzimidazoles selon la revendication 4 ou 5, **caractérisé en ce que** la solution de réticulation à base de peroxyde comprend un peroxodisulfate inorganique comme réticulant.

7. Procédé de stabilisation mécanique des polybenzimidazoles selon l'une quelconque des revendications 1 à 3, **caractérisé en ce que** la solution de réticulation comprend un solvant organique et au moins un peroxyde organique comme réticulant.

8. Procédé de stabilisation mécanique des polybenzimidazoles selon l'une quelconque des revendications précédentes, **caractérisé en ce que** le dopage est obtenu en traitant la membrane poreuse de polybenzimidazole réticulé avec un dopant choisi dans le groupe constitué par l'acide phosphorique et l'acide sulfurique pendant 2 à 5 heures pour obtenir la membrane électrolyte polymère conductrice de protons.

9. Procédé de stabilisation mécanique des polybenzimidazoles selon l'une quelconque des revendications 1 à 7, **caractérisé en ce que** le dopage est obtenu en traitant la membrane poreuse de polybenzimidazole réticulé avec au moins un liquide ionique pendant 2 à 5 heures pour obtenir la membrane électrolyte polymère conductrice d'ions.

10. Procédé de stabilisation mécanique des polybenzimidazoles selon l'une quelconque des revendications 1 à 7, **caractérisé en ce que** la membrane électrolyte polymère conductrice de protons est traitée avec de l'acide phosphorique à 70 % pendant 2 à 5 heures.

11. Procédé de stabilisation mécanique des polybenzimidazoles selon l'une quelconque des revendications 1 à 7, **caractérisé en ce que** le dopage est effectué en traitant la membrane poreuse de polybenzimidazole réticulé avec une solution aqueuse de 20 à 50 % en poids d'une base inorganique forte soluble dans l'eau pendant 2 à 5 heures.

12. Procédé de stabilisation mécanique des polybenzimidazoles selon l'une des revendications 1 à 12, **caractérisé en ce que** la membrane poreuse autoportante de polybenzimidazole contenant de l'eau comprend entre 0,5 et 50 % en poids de charge inorganique, de préférence de la montmorillonite.

13. Membrane électrolyte polymère conductrice d'ions obtenue par le procédé selon l'une des revendications 1 à 13.

14. Utilisation d'une membrane à électrolyte polymère conductrice d'ions selon la revendication 14 pour fabriquer une pile à combustible à membrane à électrolyte polymère et/ou des assemblages membrane-électrodes (AME) à partir de cette membrane.

15. Pile à combustible à membrane électrolyte polymère comprenant une membrane électrolyte polymère conductrice d'ions selon la revendication 14.
